# EUROPEAN PATENT APPLICATION

(11) **EP 2 899 620 A1**
(43) Date of publication of application: **29.07.2015**
(21) Application number: 13839066.1
(22) Date of filing: 26.06.2013
(51) Int. Cl.: G06F 3/0488, G06F 3/0481, G06F 3/041

(54) **SCREEN UNLOCKING UNIT AND SCREEN UNLOCKING METHOD THEREOF AS WELL AS MOBILE COMMUNICATION EQUIPMENT**

(30) Priority: 24.09.2012 CN 201210359557
(71) Applicant: Huizhou TCL Mobile Communication Co., Ltd., Huizhou, Guangdong 516006 (CN)
(72) Inventor: QIAN, Wen, Huizhou Guangdong 516006 (CN)
(74) Representative: D'Halleweyn, Nele Veerle Trees Gertrudis
(86) International application number: PCT/CN2013/077959
(87) International publication number: WO 2014/044068

(57) **Abstract**

The present disclosure discloses a screen-unlocking unit, a screen-unlocking method thereof and a mobile communication apparatus. The screen-unlocking method comprises: providing a touch symbol for display on a screen, with the touch symbol being correspondingly related to a shortcut icon; receiving a touching action of a user on the touch symbol, and displaying the shortcut icon on the touch symbol to select the shortcut icon; and receiving an unlocking operation of the user to release locking of the screen, and entering into an interface corresponding to the selected shortcut icon. The present disclosure further discloses a screen-unlocking unit and a mobile communication apparatus. In the aforesaid manner, the screen-unlocking unit, the screen-unlocking method thereof and the mobile communication apparatus of the present disclosure can improve the operation efficiency of the user and enrich the user's experiences.

## Description

### FIELD OF THE INVENTION

The present disclosure relates to the technical field of mobile communication technologies, and more particularly, to a screen-unlocking unit, a screen-unlocking method thereof and a mobile communication apparatus.

### BACKGROUND OF THE INVENTION

In recent years, the touch technology has been widely used in mobile communication apparatuses. The most prominent feature of the mobile communication apparatuses adopting the touch technology is that they have a large-area screen which can bring good visual experiences to users, and this is advantageous whether for text displaying or for image displaying. In order to save the electric power, protect the user's privacy and prevent maloperation of the user on the screen, the mobile communication apparatuses are provided with a screen-locking function.

Conventionally, screen-unlocking modes of the mobile communication apparatuses are mostly achieved by sliding in the left-and-right direction or a password. However, the user is unable to enter a particular interface immediately after the screen is unlocked; and instead, the user must execute a number of operations in various different interfaces before entering the particular interface, which leads to a poor operation efficiency. For example, after the screen is unlocked, the user who wants to enter a phonebook interface must firstly enter the main-menu interface, navigate in the main-menu interface to enter a selection interface and then select directory phonebook option in the selection interface before entering the phonebook interface.

### SUMMARY OF THE INVENTION

A primary objective of the present disclosure is to provide a screen-unlocking unit, a screen-unlocking method thereof and a mobile communication apparatus, which can improve the operation efficiency of the user and enrich the user's experiences.

To solve the aforesaid technical problem, a technical solution adopted in the present disclosure is to provide a screen-unlocking method for a mobile communication apparatus. The method comprises: providing a touch symbol for display on a screen, wherein the touch symbol is correspondingly related to shortcut icons; receiving a touching action of a user on the touch symbol, and displaying the shortcut icons on the touch symbol to select one shortcut icon; and receiving an unlocking operation of the user to release locking of the screen, and entering into an interface corresponding to the selected shortcut icon. Specifically, a plurality of shortcut icons are provided, each of which corresponds to a different interface, the touching action of the user time and time again on the touch symbol is received, and in response to the touching action every time, one of the shortcut icons is displayed synchronously on the touch symbol in sequence to select one shortcut icon.

The step of receiving an unlocking operation of the user to release locking of the screen comprises: providing a predetermined number of unlocking symbols for display on the screen after selecting the shortcut icon; receiving a sliding action of the user that moves across a plurality of unlocking symbols among the predetermined number of unlocking symbols to form a touch trajectory; and determining whether the touch trajectory is consistent with a preset unlocking trajectory, and releasing the locking of the screen if the touch trajectory is consistent with the preset unlocking trajectory, or keeping the locking of the screen if the touch trajectory is inconsistent with a preset unlocking trajectory.

The touch symbol is one of the predetermined number of unlocking symbols.

The step of receiving an unlocking operation of the user to release locking of the screen comprises: providing a predetermined number of numerical symbols for display on the screen after selecting the shortcut icon; receiving selection of a plurality of numerical symbols among the predetermined number of numerical symbols by the user to obtain an input password; and determining whether the input password is consistent with a preset unlocking password, and releasing the locking of the screen if the input password is consistent with the preset unlocking password, or keeping the locking of the screen if the input password is inconsistent with the preset unlocking password.

The touch symbol is one of the predetermined number of numeric symbols.

To solve the aforesaid technical problem, another technical solution adopted in the present disclosure is to provide a screen-unlocking method for a mobile communication apparatus, which comprises: providing a touch symbol for display on a screen, wherein the touch symbol is correspondingly related to a shortcut icon; receiving a touching action of a user on the touch symbol, and displaying the shortcut icon on the touch symbol to select the shortcut icon; and receiving an unlocking operation of the user to release locking of the screen, and entering into an interface corresponding to the selected shortcut icon.

A plurality of shortcut icons are provided, each of which corresponds to a different interface, and the step of receiving a touching action of a user on the touch symbol and displaying the shortcut icon on the touch symbol to select the shortcut icon is specifically as follows: receiving the touching action of the user time and time again on the touch symbol, and in response to the touching action every time, displaying synchronously one of the shortcut icons on the touch symbol in sequence to select one of the plurality of shortcut icons.

The step of receiving an unlocking operation of the user to release locking of the screen comprises: providing a predetermined number of unlocking symbols for display on the screen after selecting the shortcut icon; receiving a sliding action of the user that moves across a plurality of unlocking symbols among the predetermined number of unlocking symbols to form a touch trajectory; and determining whether the touch trajectory is consistent with a preset unlocking trajectory, and releasing the locking of the screen if the touch trajectory is consistent with the preset unlocking trajectory, or keeping the locking of the screen if the touch trajectory is inconsistent with the preset unlocking trajectory.

The touch symbol is one of the predetermined number of unlocking symbols.

The step of receiving an unlocking operation of the user to release locking of the screen comprises: providing a predetermined number of numerical symbols for display on the screen after selecting the shortcut icon; receiving selection of a plurality of numerical symbols among the predetermined number of numerical symbols by the user to obtain an input password; and determining whether the input password is consistent with a preset unlocking password, and releasing the locking of the screen if the input password is consistent with the preset unlocking password, or keeping the locking of the screen if the input password is inconsistent with the preset unlocking password.

The touch symbol is one of the predetermined number of numeric symbols.

A plurality of touch symbols are provided, a plurality of shortcut icons are provided, each of the shortcut icons corresponds to a different interface, the plurality of touch symbols are in one-to-one correspondence with the plurality of shortcut icons, and the step of receiving a touching action of a user on the touch symbol and displaying the shortcut icon on the touch symbol to select the shortcut icon is specifically as follows: receiving a touching action of the user on one of the plurality of touch symbols, and in response to the touching action, displaying a corresponding one of the shortcut icons on the touch symbol to select one shortcut icon.

To solve the aforesaid technical problem, a further technical solution adopted in the present disclosure is to provide a screen-unlocking unit for a mobile communication apparatus. The screen-unlocking unit comprises a display module, a touch sensing module and an unlocking module. The display module is configured to provide a touch symbol for display on a screen, and the touch symbol is correspondingly related to a shortcut icon. The touch sensing module is configured to receive a touching action of a user on the touch symbol and display the shortcut icon on the touch symbol to select the shortcut icon. The unlocking module is configured to receive an unlocking operation of the user to release locking of the screen and enter into an interface corresponding to the selected shortcut icon.

The screen-unlocking unit is provided with a plurality of shortcut icons, each of which corresponds to a different interface, and the touch sensing module is specifically configured to: receive the touching action of the user time and time again on the touch symbol, and in response to the touching action every time, display synchronously one of the shortcut icons on the touch symbol in sequence to select one of the plurality of shortcut icons.

To solve the aforesaid technical problem, a still further technical solution adopted in the present disclosure is to provide a mobile communication apparatus which comprises any one of the screen-unlocking units described above.

The present disclosure has the following benefits: different from the prior art, the screen-unlocking unit, the screen-unlocking method thereof and the mobile communication apparatus of the present disclosure allow a user to select a shortcut icon before the locking of a screen is released, and to enter into an interface corresponding to the selected shortcut icon after the locking of the screen is released. Thereby, the operation efficiency of the user can be improved and the user's experiences can be enriched.

### BRIEF DESCRIPTION OF THE DRAWINGS

FIG. 1 is a schematic flowchart diagram illustrating a screen-unlocking method for a mobile communication apparatus according to a first embodiment of the present disclosure;
FIG. 2 is a schematic flowchart diagram illustrating a screen-unlocking method for a mobile communication apparatus according to a second embodiment of the present disclosure;
FIG. 3 is a schematic flowchart diagram illustrating a way to receive an unlocking operation of a user in the screen-unlocking method shown in FIG. 2;
FIG. 4 is a schematic flowchart diagram illustrating another way to receive an unlocking operation of a user in the screen-unlocking method shown in FIG. 2;
FIG. 5 is a schematic flowchart diagram illustrating a screen-unlocking method for a mobile communication apparatus according to a third embodiment of the present disclosure; and
FIG. 6 is a schematic structural view illustrating a screen-unlocking unit for a mobile communication apparatus according to an embodiment of the present disclosure.

### DETAILED DESCRIPTION OF THE INVENTION

The present disclosure will be detailed hereinbelow with reference to the attached drawings and the embodiments.

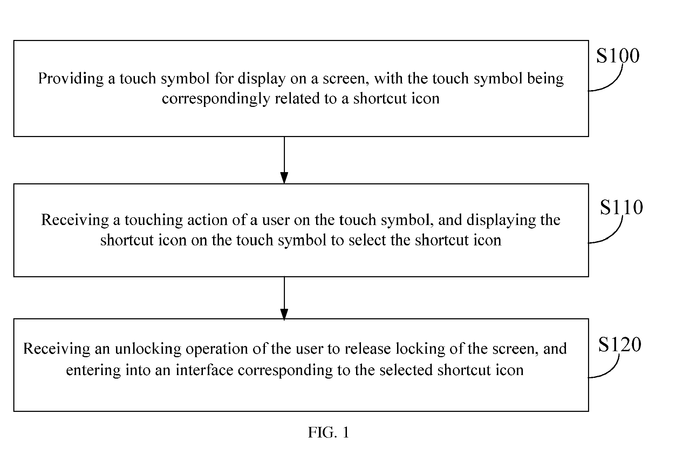

Referring to FIG. 1, there is shown a schematic flowchart diagram illustrating a screen-unlocking method for a mobile communication apparatus according to a first embodiment of the present disclosure. In this embodiment, the screen-unlocking method comprises following steps of:

Step S100: providing a touch symbol for display on a screen, and the touch symbol is correspondingly related to a shortcut icon.

The touch symbol is provided on the screen after the screen is locked, and the touch symbol is a prompt icon for touching. The touch symbol may be located at any position of the screen. The shortcut icon is a quick-start entry to an interface of an application program or a particular function in the mobile communication apparatus. The touch symbol is correspondingly related to the shortcut icon and the shortcut icon can be selected by touching the touch symbol. The correspondence relationship between the touch symbol and the shortcut icon is preset by the user, and the users can use a shortcut icon of a particular function or an application program which are most commonly used, to correspondingly relate to the touch symbol.

Step S110: receiving a touching action of a user on the touch symbol, and displaying the shortcut icon on the touch symbol to select the shortcut icon.

The touching action of the user on the touch symbol is sensed, and in response to the touching action, the shortcut icon correspondingly related to the touch symbol is displayed on the touch symbol. Herein, there are two kinds which can display the shortcut icon on the touch symbol: one kind is the shortcut icon has a same size as the touch symbol and thus the shortcut icon overlays the touch symbol completely; and the other kind is the shortcut icon has a size smaller than that of the touch symbol and thus the shortcut icon overlays only a part of the touch symbol.

After the shortcut icon is displayed, the selection of the shortcut icon can be completed after being confirmed by the user. The user may confirm this in various ways, for example, the screen displays a touch button different from the touch symbol and configured for being confirmed by the user. Alternatively, a physical button on the mobile communication apparatus is used, and the present disclosure has no limitation on this.

Step S120: receiving an unlocking operation of the user to release locking of the screen, and entering into an interface corresponding to the selected shortcut icon.

The unlocking operation is performed once being confirmed by the user; and after the locking of the screen is released, the user can directly enter into the interface corresponding to the selected shortcut icon.

In the screen-unlocking method of the present disclosure, the user can select a shortcut icon correspondingly related to the touch symbol before the locking of the screen is released, and can directly enter into an interface corresponding to the selected shortcut icon after the locking of the screen is released. Therefore, a number of operations in different interfaces executed by the user can be avoided, which can improve the operation efficiency of the user and enrich the user's experiences.

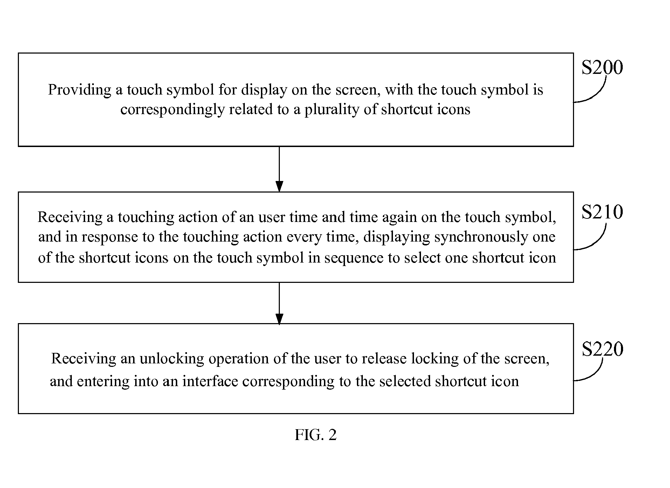

Referring to FIG. 2, there is shown a schematic flowchart diagram illustrating a screen-unlocking method for a mobile communication apparatus according to a second embodiment of the present disclosure. In this embodiment, the screen-unlocking method comprises the following steps of:

Step S200: providing a touch symbol for display on the screen, with the touch symbol being correspondingly related to a plurality of shortcut icons.

The user may enter into a plurality of different interfaces most frequently. For example, the user frequently enters into interfaces of particular functions or application programs such as the telephone directory interface, the text message interface, the browser interface and the camera interface. In this case, this embodiment provides the plurality of the shortcut icon, each of which corresponds to a different interface. The touch symbol is correspondingly related to the plurality of shortcut icons at the same time.

Step S210: receiving a touching action of the user time and time again on the touch symbol, and in response to the touching action every time, displaying synchronously one of the shortcut icons on the touch symbol in sequence to select one of the plurality of shortcut icons.

Because the plurality of shortcut icons are provided, the user who wants to select a certain shortcut icon might needs to execute the touching action time and time again. Herein, the number of times of the touching action on the touch symbol may be set for switching the shortcut icons. A specific application example is provided in the present disclosure, as shown in Table 1.

**Table 1 Correspondence relationship between the number of times of the touching action on the touch symbol and the shortcut icons**

| The number of times | Shortcut icon |
|---|---|
| 0 | Main menu |
| 1 | Camera |
| 2 | Text message |
| 3 | Telephone directory |
| 4 | Browser |

As can be seen from Table 1, the touch symbol is correspondingly related to the shortcut icons of application programs or particular functions such as the main menu, the camera, the text message, the telephone directory and the browser at the same time; and the number of times of the touching action determines which shortcut icon is to be selected.

In a case where the size of the touch symbol is the same as that of each of the shortcut icons, the user who wants to select the shortcut icon corresponding to the telephone directory needs to execute the touching action three times on the touch symbol. When the touching action is executed the first time, the shortcut icon corresponding to the camera is displayed on the touch symbol synchronously; when the touching action is executed the second time, the shortcut icon corresponding to the text message is displayed on the touch symbol synchronously to take the place of the shortcut icon corresponding to the camera; and when the touching action is executed the third time, the shortcut icon corresponding to the telephone directory is displayed on the touch symbol synchronously to take the place of the shortcut icon corresponding to the text message. Then, the shortcut icon corresponding to the telephone directory can be selected by the user.

In a case where the size of the touch symbol is larger than that of each of the shortcut icons, all shortcut icons may be displayed on the touch symbol at the same time in this embodiment. All shortcut symbols are displayed originally in a gray color; and once the user executes the touching action, a corresponding shortcut icon will become highlighted synchronously.

In default state, the shortcut icon corresponding to the main menu is selected if no touching action is executed by the user.

Step S220: receiving an unlocking operation of the user to release locking of the screen, and entering into an interface corresponding to the selected shortcut icon.

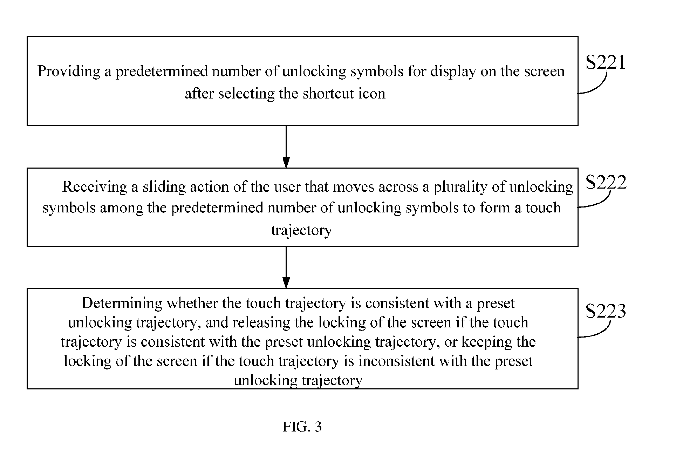

Referring to FIG. 3, there is shown a schematic flowchart diagram illustrating a way to receive an unlocking operation of the user in the screen-unlocking method shown in FIG. 2. The step S220 further comprises:

Step S221: providing a predetermined number of unlocking symbols for display on the screen after selecting the shortcut icon.

After the user has selected the shortcut icon by pressing a touch button on the screen for confirmation or by pressing a physical button on the mobile communication apparatus for confirmation, the screen is refreshed and a predetermined number of unlocking symbols are provided for display on the screen. These unlocking symbols may be arranged in a matrix or may be distributed irregularly.

In this embodiment, the touch symbol is one of the predetermined number of unlocking symbols. After the shortcut icon is selected, the screen is refreshed and the predetermined number of unlocking symbols are displayed on the screen together with the touch symbol.

Step S222: receiving a sliding action of the user that moves across a plurality of unlocking symbols among the predetermined number of unlocking symbols to form a touch trajectory.

The unlocking symbols are circular; and the sliding action needs to move across at least four unlocking symbols.

Step S223: determining whether the touch trajectory is consistent with a preset unlocking trajectory, and releasing the locking of the screen if the touch trajectory is consistent with the preset unlocking trajectory, or keeping the locking of the screen if the touch trajectory is inconsistent with the preset unlocking trajectory.

The preset unlocking trajectory is preset by the user and can be modified as needed.

After it is determined that the touch trajectory is consistent with the present unlocking trajectory, the screen is refreshed and the user can directly enter into the interface corresponding to the selected shortcut icon.

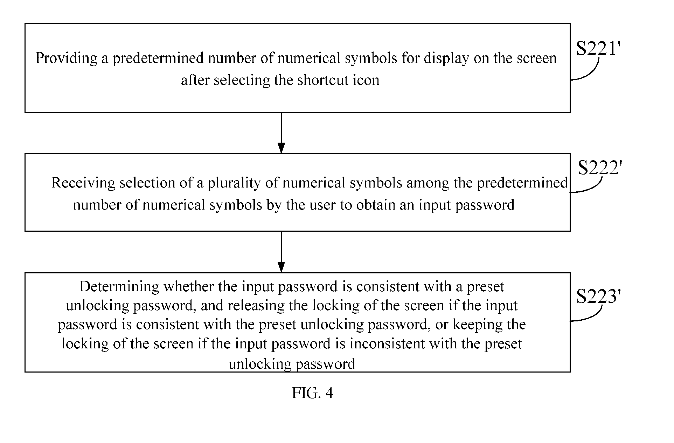

Referring to FIG. 4, there is shown a schematic flowchart diagram of another way to receive an unlocking operation of the user of the screen-unlocking method shown in FIG. 2. The step S220 further comprises:

Step S221': providing a predetermined number of numerical symbols for display on the screen after selecting the shortcut icon.

After the user has selected the shortcut icon by pressing the touch button on the screen for confirmation or by pressing the physical button on the mobile communication apparatus for confirmation, the screen is refreshed and a predetermined number of numerical symbols are provided for display on the screen. These numerical symbols show digits 1 to 9 sequentially, and may be arranged in a matrix or may be distributed irregularly.

In this embodiment, the touch symbol is one of the predetermined number of numerical symbols. After the shortcut icon is selected, the screen is refreshed and the predetermined number of numerical symbols are shown on the screen together with the touch symbol.

Step S222': receiving selection of a plurality of numerical symbols among the predetermined number of numerical symbols by the user to obtain an input password.

The user needs to input an input password comprising at least four digits, that is, the user needs to select four different or identical numerical symbols. In this embodiment, an input box is further displayed on the screen for displaying the input password. In order to protect the input password of the user, each digit comprised in the input password is shown in the form of "*" in the input box, and only prompts the number of inputted by the user.

Step S223': determining whether the input password is consistent with a preset unlocking password, and releasing the locking of the screen if the input password is consistent with the preset unlocking password, or keeping the locking of the screen if the input password is inconsistent with the preset unlocking password.

The preset unlocking password is preset by the user and can be modified as needed. After it is determined that the input password is consistent with the preset unlocking password, the screen is refreshed and the user can directly enter into the interface corresponding to the selected shortcut password.

In this mechanism of inputting a password, the input password is acquired by selecting the numerical symbols. However, in this mechanism, the input password may also be acquired by selecting alphabetic symbols instead of numerical symbols; and in this case, the input number is acquired by selecting a number of letters from the 26 letters. Furthermore, in this mechanism, the input password may also be acquired by adopting a combination of alphabetic symbols and numerical symbols.

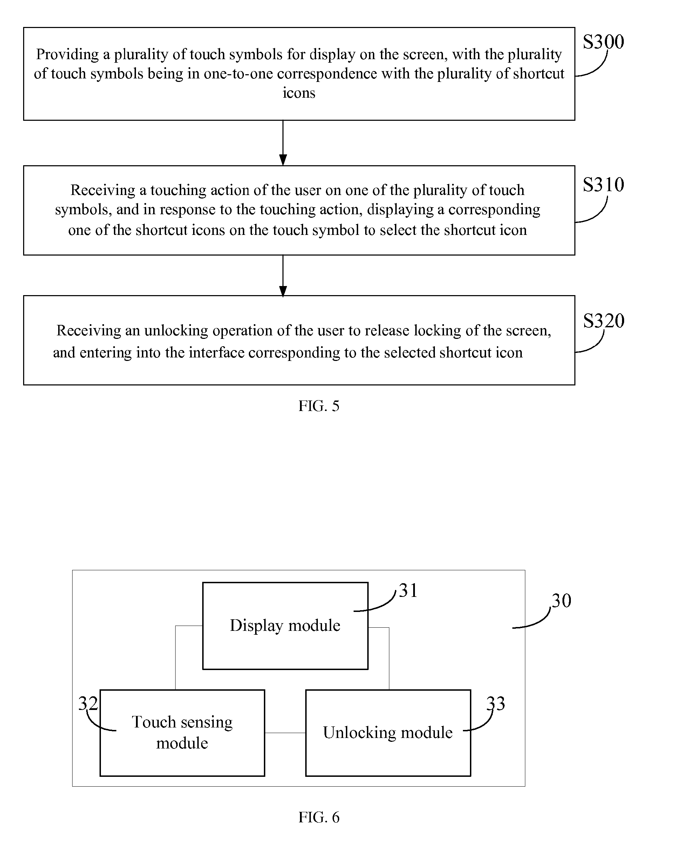

Referring to FIG. 5, there is shown a schematic flowchart diagram illustrating a screen-unlocking method for a mobile communication apparatus according to a third embodiment of the present disclosure. In this embodiment, the screen-unlocking method comprises following steps of:

Step S300: providing a plurality of touch symbols for display on the screen, with the plurality of touch symbols being in one-to-one correspondence with a plurality of shortcut icons.

The user may enter into a number of different interfaces most frequently. In this case, the plurality of shortcut icons are provided, each of which corresponds to a different interface. The plurality of touch symbol are also provided, with the plurality of touch symbols being in one-to-one correspondence with the plurality of shortcut icons.

Step S310: receiving a touching action of the user on one of the plurality of touch symbols, and in response to the touching action, displaying a corresponding one of the shortcut icons on the touch symbol to select the shortcut icon.

Each touch symbol corresponds to one shortcut icon. The user who wants to select a shortcut icon only needs to execute a touching action on the corresponding touch symbol to display the shortcut icon on the touch symbol. When the user executes another touching action on another touch symbol, the original shortcut icon will disappear and the original touch symbol will show up again, and a new shortcut icon is displayed on the aforesaid another touch symbol.

Step S320: receiving an unlocking operation of the user to release locking of the screen, and entering into the interface corresponding to the selected shortcut icon.

The step of receiving the unlocking operation of the user has the same technical features as the step S220 in the second embodiment and thus will not be further described again.

Referring to FIG. 6, there is shown a schematic structural view illustrating a screen-unlocking unit for a mobile communication apparatus according to an embodiment of the present disclosure. The screen-unlocking unit 30 comprises a display module 31, a touch sensing module 32 and an unlocking module 33.

The display module 31 is configured to provide a touch symbol for display on a screen; and the touch symbol is correspondingly related to a shortcut icon. The shortcut icon is a quick-start entry to an interface of an application program or a particular function of the mobile communication apparatus.

The touch sensing module 32 is configured to receive a touching action of a user on the touch symbol, and display the shortcut icon on the touch symbol to select the shortcut icon. In this embodiment, the screen-unlocking unit 30 is provided with a plurality of shortcut icons, each of which corresponds to a different interface; and the touch sensing module 32 is specifically configured to receive a touching action of the user time and time again on the touch symbol, and in response to the touching action every time, display synchronously one of the shortcut icons on the touch symbol in sequence to select one of the plurality of shortcut icons.

The unlocking module 33 is configured to receive an unlocking operation of the user to release locking of the screen, and enter into an interface corresponding to the selected shortcut icon.

The screen-unlocking unit shown in FIG. 6 may be used in a variety of mobile communication apparatuses such as a mobile phone, a tablet computer or a personal digital assistant (PDA).

According to the above descriptions, the screen-unlocking unit, the screen-unlocking method thereof and the mobile communication apparatus of the present disclosure allow the user to select a shortcut icon before the locking of the screen is released, and then enter into an interface corresponding to the selected shortcut icon after the locking of the screen is released. Thereby, a number of operations in different interfaces executed by the user can be avoided, which can improve the operation efficiency of the user and enrich the user' experiences.

What described above are only the embodiments of the present disclosure, but are not intended to limit the scope of the present disclosure. Any equivalent structures or equivalent process flow modifications that are made according to the specification and the attached drawings of the present disclosure, or any direct or indirect applications of the present disclosure in other related technical fields shall all be covered within the scope of the present disclosure.

## Claims

1. A screen-unlocking method for a mobile communication apparatus, comprising:
providing a touch symbol for display on a screen, wherein the touch symbol is correspondingly related to shortcut icons;
receiving a touching action of a user on the touch symbol, and displaying the shortcut icons on the touch symbol to select one shortcut icon; and
receiving an unlocking operation of the user to release locking of the screen, and entering into an interface corresponding to the selected shortcut icon;
wherein a plurality of shortcut icons are provided, each of which corresponds to a different interface, the touching action of the user time and time again on the touch symbol is received, and in response to the touching action every time, one of the shortcut icons is displayed synchronously on the touch symbol in sequence to select one shortcut icon.

2. The screen-unlocking method of claim 1, wherein the step of receiving an unlocking operation of the user to release locking of the screen comprises:
providing a predetermined number of unlocking symbols for display on the screen after selecting the shortcut icon;
receiving a sliding action of the user that moves across a plurality of unlocking symbols among the predetermined number of unlocking symbols to form a touch trajectory; and
determining whether the touch trajectory is consistent with a preset unlocking trajectory, and releasing the locking of the screen if the touch trajectory is consistent with the preset unlocking trajectory, or keeping the locking of the screen if the touch trajectory is inconsistent with the preset unlocking trajectory.

3. The screen-unlocking method of claim 1, wherein the touch symbol is one of the predetermined number of unlocking symbols.

4. The screen-unlocking method of claim 1, wherein the step of receiving an unlocking operation of the user to release locking of the screen comprises:
providing a predetermined number of numerical symbols for display on the screen after selecting the shortcut icon;
receiving selection of a plurality of numerical symbols among the predetermined number of numerical symbols by the user to obtain an input password; and
determining whether the input password is consistent with a preset unlocking password, and releasing the locking of the screen if the input password is consistent with the preset unlocking password, or keeping the locking of the screen if the input password is inconsistent with the preset unlocking password.

5. The screen-unlocking method of claim 4, wherein the touch symbol is one of the predetermined number of numeric symbols.

6. A screen-unlocking method for a mobile communication apparatus, comprising:
providing a touch symbol for display on a screen, wherein the touch symbol is correspondingly related to a shortcut icon;
receiving a touching action of a user on the touch symbol, and displaying the shortcut icon on the touch symbol to select the shortcut icon; and
receiving an unlocking operation of the user to release locking of the screen, and entering into an interface corresponding to the selected shortcut icon.

7. The screen-unlocking method of claim 6, wherein a plurality of shortcut icons are provided, each of which corresponds to a different interface, and the step of receiving a touching action of a user on the touch symbol and displaying the shortcut icon on the touch symbol to select the shortcut icon is specifically as follows:
receiving the touching action of the user time and time again on the touch symbol, and in response to the touching action every time, displaying synchronously one of the shortcut icons on the touch symbol in sequence to select one shortcut icon.

8. The screen-unlocking method of claim 7, wherein the step of receiving an unlocking operation of the user to release locking of the screen comprises:
providing a predetermined number of unlocking symbols for display on the screen after selecting the shortcut icon;
receiving a sliding action of the user that moves across a plurality of unlocking symbols among the predetermined number of unlocking symbols to form a touch trajectory; and
determining whether the touch trajectory is consistent with a preset unlocking trajectory, and releasing the locking of the screen if the touch trajectory is consistent with the preset unlocking trajectory, or keeping the locking of the screen if the touch trajectory is inconsistent with the preset unlocking trajectory.

9. The screen-unlocking method of claim 8, wherein the touch symbol is one of the predetermined number of unlocking symbols.

10. The screen-unlocking method of claim 7, wherein the step of receiving an unlocking operation of the user to release locking of the screen comprises:
providing a predetermined number of numerical symbols for display on the screen after selecting the shortcut icon;
receiving selection of a plurality of numerical symbols among the predetermined number of numerical symbols by the user to obtain an input password; and
determining whether the input password is consistent with a preset unlocking password, and releasing the locking of the screen if the input password is consistent with the preset unlocking password, or keeping the locking of the screen if the input password is inconsistent with the preset unlocking password.

11. The screen-unlocking method of claim 10, wherein the touch symbol is one of the predetermined number of numeric symbols.

12. The screen-unlocking method of claim 6, wherein a plurality of touch symbols are provided, a plurality of shortcut icons are provided, each of the shortcut icons corresponds to a different interface, the plurality of touch symbols are in one-to-one correspondence with the plurality of shortcut icons, and the step of receiving a touching action of a user on the touch symbol and displaying the shortcut icon on the touch symbol to select the shortcut icon is specifically as follows:
receiving a touching action of the user on one of the plurality of touch symbols, and in response to the touching action, displaying a corresponding one of the shortcut icons on the touch symbol to select one shortcut icon.

13. A screen-unlocking unit for a mobile communication apparatus, comprising:
a display module, being configured to provide a touch symbol for display on a screen, wherein the touch symbol is correspondingly related to a shortcut icon;
a touch sensing module, being configured to receive a touching action of a user on the touch symbol, and display the shortcut icon on the touch symbol to select the shortcut icon; and
an unlocking module, being configured to receive an unlocking operation of the user to release locking of the screen, and enter into an interface corresponding to the selected shortcut icon.

14. The screen-unlocking unit of claim 13, wherein the screen-unlocking unit is provided with a plurality of shortcut icons, each of which corresponds to a different interface, and the touch sensing module is specifically configured to:
receive the touching action of the user time and time again on the touch symbol, and in response to the touching action every time, display synchronously one of the shortcut icons on the touch symbol in sequence to select one of the plurality of shortcut icons.

15. A mobile communication apparatus, comprising the screen-unlocking unit of any one of claims 13 and 14.
